(19) **Europäisches Patentamt**
**European Patent Office**
**Office européen des brevets**

(11) **EP 1 884 793 A2**

(12) **EUROPEAN PATENT APPLICATION**

(43) Date of publication:
06.02.2008 Bulletin 2008/06

(51) Int Cl.:
*G01S 3/786* (2006.01)    *G06T 7/60* (2006.01)

(21) Application number: 07252900.1

(22) Date of filing: 23.07.2007

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **27.07.2006 JP 2006205070**

(71) Applicant: **Sony Corporation**
**Minato-ku**
**Tokyo (JP)**

(72) Inventor: **Konishi, Tetsuya**
**Tokyo (JP)**

(74) Representative: **Smith, Samuel Leonard**
**J.A. Kemp & Co.,**
**14 South Square,**
**Gray's Inn**
**London WC1R 5JJ (GB)**

(54) **Monitoring apapratus, monitoring method, and program**

(57)    A monitoring apparatus which uses video data imaged and outputted from a monitoring imaging device for monitoring is disclosed. The monitoring apparatus includes: a detected object determination processing part configured to determine a position of a detected object from the video data; a reference position setting processing part configured to set a reference position of the object determined by the detected object determination processing part; and a detection processing part configured to relatively set a single or a plurality of search areas within a range of video shown by the video data with respect to the reference position set by the reference position setting processing part, and to detect an object within the set search area.

## FIG. 1A

EP 1 884 793 A2

# FIG. 1B

<u>100</u>

1a

VIDEO DATA, METADATA

11

2

VIDEO DATA,
METADATA

VIDEO DATA, METADATA

1b

12

**Description**

CROSS REFERENCES TO RELATED APPLICATIONS

The present invention contains subject matter related to Japanese Patent Application JP 2006-205070 filed in the Japanese Patent Office on July 27, 2006, the entire contents of which being incorporated herein by reference.

BACKGROUND OF THE INVENTION

1. Field of the Invention

The present invention relates to a monitoring apparatus and a monitoring method which acquire video data or data about video data from a monitoring camera to perform monitoring processes based on the acquired data, and a program which executes the monitoring method.

2. Description of the Related Art

Heretofore, a monitoring system is used which connects a monitoring camera to a control unit via a network. In such a monitoring system, a monitoring camera sends taken video data to a monitoring apparatus that is a control unit via a network. The monitoring apparatus records the received video data as swell as analyzes the video data to detect the occurrence of irregularities, and outputs alarms. A monitoring person can monitor while he/she is confirming monitor video displayed on a monitor and the descriptions of the alarms outputted from the control unit.

In addition, the recent monitoring cameras not only send taken video data to the monitoring apparatus but also have a function that generates metadata about taken video data (for example, alarm information, temperature information, and field angle information about the camera) and send metadata to the monitoring apparatus. In the monitoring system using the monitoring camera like this, the monitoring apparatus filters metadata supplied from the monitoring camera through a metadata filter in which certain conditions are set to output alarms (hereinafter, referred to as a filter), and outputs alarms when the conditions are matched. For example, such conditions are set to the metadata filter that detect irregularities such as a trespasser into a certain place and a moving object (an object) passing through a certain border line.

JP-A-2003-274390 (Patent Reference 1) describes a technique in which video data of monitor video is supplied from a monitoring camera to a monitoring apparatus via a network, and the monitoring apparatus confirms monitor video at the time when the irregularities have occurred.

SUMMARY OF THE INVENTION

In the case in which this type of conventional monitoring system monitors, in determining whether the situations shown in the taken video are irregularities, fixed places such as doors, windows, and gates of a building are shot to determine whether there is a person going in and out the taken door. The area for a monitoring target is a fixed area determined in advance. In the case in which a fixed place is monitored, it is sufficient to monitor whether there is a person.

In contrast to this, it is demanded to allow more sophisticated monitoring. More specifically, for example, in the case in which a moving object like an automobile is recognized from monitor video to determine whether a person descends out of the recognized automobile, a problem arises that it is difficult to know it.

It is desirable to allow an object to be recognized well for monitoring even though a monitoring target is not fixed.

An embodiment of the invention is configured in which in the case in which video data imaged and outputted from a monitoring imaging device is used for monitoring, including the steps of: determining a position of a detected object from the video data; setting a reference position of the object determined in the detected object determination process; and setting a single or a plurality of search areas within a range of video shown by the video data relatively to the reference position set in the reference position setting process, and detecting an object within the set search area.

With this configuration, the detection area is determined with reference to the detected object in the imaged video under certain conditions.

According to an embodiment of the invention, the detection area is determined with reference to the detected object in the imaged video under certain conditions, and dynamic monitoring can be performed in accordance with the situations in the monitoring area. For example, the search area for a moving object is set in the vicinity of an automobile detected from monitor video, and it can be detected whether there is a person getting off the automobile.

BRIEF DESCRIPTION OF THE DRAWINGS

Figs. 1A and 1B show a diagram depicting an exemplary configuration of a monitoring system according to an embodiment of the invention;
Fig. 2 shows a block diagram depicting an exemplary internal configuration of a monitoring camera according to an embodiment of the invention;
Fig. 3 shows a block diagram depicting an exemplary internal configuration of a client terminal according to an embodiment of the invention;
Fig. 4 shows a flow chart depicting an exemplary detection process according to an embodiment of the invention;

Fig. 5 shows an illustration depicting an exemplary normalization process of an object according to an embodiment of the invention;

Fig. 6 shows an illustration depicting exemplary settings of the reference position of an obj ect according to an embodiment of the invention (Example 1);

Fig. 7 shows an illustration depicting exemplary settings of the reference position of an obj ect according to an embodiment of the invention (Example 2);

Fig. 8 shows an illustration depicting exemplary monitor video according to an embodiment of the invention;

Fig. 9 shows an illustration depicting exemplary monitor video according to an embodiment of the invention;

Fig. 10 shows an illustration depicting exemplary monitor video according to an embodiment of the invention;

Fig. 11 shows an illustration depicting exemplary monitor video according to an embodiment of the invention; and

Fig. 12 shows an illustration depicting exemplary monitor video according to an embodiment of the invention.

DETAILED DESCRIPTION OF THE INVENTION

Hereinafter, the best mode for implementing an embodiment of the invention will be described with reference to the drawings. An embodiment described below is an example suited for a monitoring system in which an imaging device (a monitoring camera) takes video data of a shooting target and generates metadata, and the obtained metadata is analyzed to detect a moving object (an object) to output the detected result.

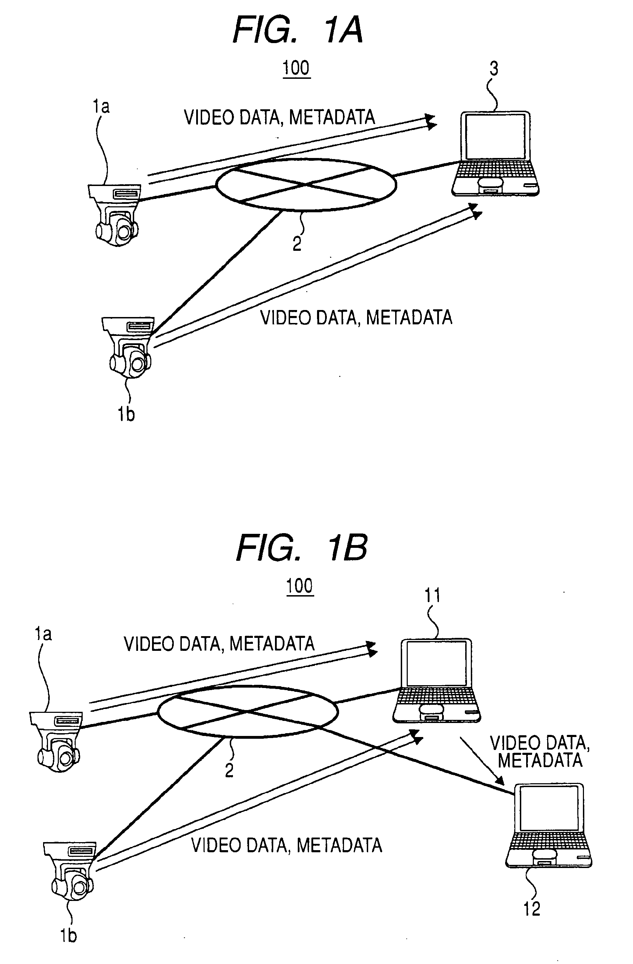

Figs. 1A and 1B are a diagram depicting the configuration of connections in an exemplary monitoring system according to an embodiment of the invention.

Fig. 1A shows a system in which a client terminal as a monitoring apparatus acquires data outputted from a monitoring camera via a network, and Fig. 1B shows a system in which a server acquires data outputted from the monitoring camera, and supplies it to the client terminal (a server/client system).

First, a monitoring system 100 shown in Fig. 1A will be described. As shown in Figs. 1A and 1B, the monitoring system 100 manages a single or a plurality of monitoring cameras. In this example, two cameras are managed. The monitoring system 100 is configured of monitoring cameras 1a and 1b which shoot a monitoring target and generate video data as well as generate metadata from video data, a client terminal 3 which stores the acquired video data and metadata, analyzes the metadata, and outputs the result, and a network 2 which connects the monitoring cameras 1a and 1b to the client terminal 3. The metadata acquired by the client terminal 3 from the monitoring cameras 1a and 1b via the network 2 is analyzed through a metadata filter (hereinafter, also referred to as a "filter"). In order to control the operations of the monitoring cameras 1a and 1b so as to obtain monitor video suited for monitoring depending on the descriptions of the filtered result, the client terminal 3 supplies switching instruction signals to the monitoring cameras 1a and 1b.

In addition, naturally, the numbers of the monitoring camera, the server and the client terminal are not restricted to this embodiment.

Here, metadata generated in the monitoring camera will be described. The term metadata is attribute information of video data taken by the imaging part of the monitoring camera. For example, the following is named.

a) Object information (information about an ID, coordinates, and the size of a moving object (an object) when the moving object is detected by the monitoring camera).
b) Shooting time data, and orientation information of the monitoring camera (a pan tilt, for example).
c) Position information of the monitoring camera.
d) Signature information of the taken image.

The term object information is information that information described as binary data in metadata is extended to a data structure with meanings such as a structure.

The termmetadata filter is decision conditions when alarm information is generated from object information, and the term alarm information is information that is filtered based on the object information extended from metadata. The term alarm information is information that is obtained by analyzing a plurality of frames of metadata to determine the velocity from the changes in the position of a moving object, by confirming whether a moving object crosses over a certain line, or by analyzing them in a composite manner.

For example, for the types of filters, there are seven types below, and a given type of filter among them may be used. Appearance: a filter that determines whether an object exists in a certain area.
Disappearance: a filter that determines whether an object appears in a certain area and goes out of the area.
Passing: a filter that determines whether an object crosses over a certain border line. Capacity (limitation of the number of objects) : a filter that counts the number of objects in a certain area and determines whether the accumulated number exceeds a predetermined value. Loitering: a filter that determines whether an object resides in a certain area over a predetermined time period.
Unattended: a filter that determines whether there is an object entering a certain area and remaining still over a predetermined time period.
Removed: a filter that detects that the object in a certain area has been removed.

For data included in alarm information, there is the filter "Capacity" among the filters described above, for example, including "the accumulated number of objects" that is generated through the filter using the accumulating total value of the detected object, "the number of objects" that is the number of objects matched with the conditions of the filter, the number of objects that is matched with the conditions of the filter within a specific frame, and attribute information of an object matched with the conditions of the filter (the ID, X-coordinate, Y-coordinate and size of an object) . As described above, alarm information includes the number (the number of people) in video and statistics thereof, which may be used as a report function.

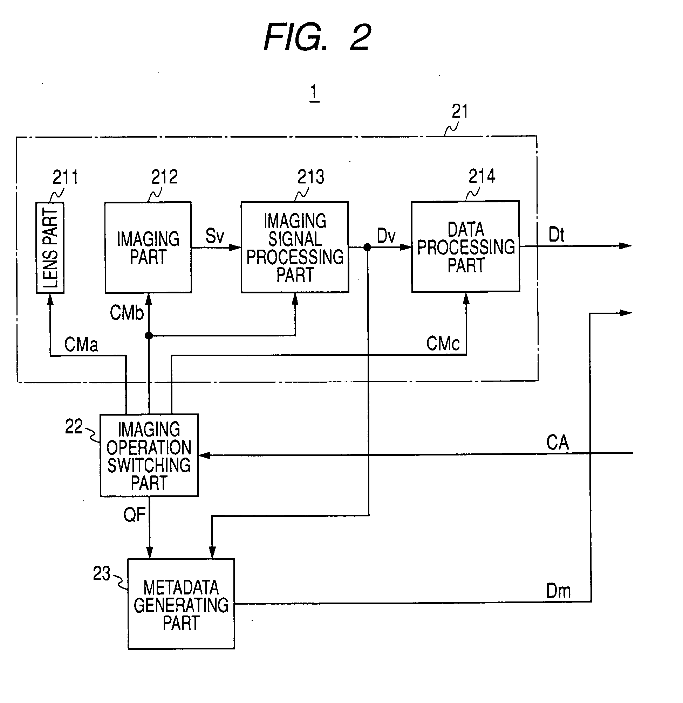

Next, the detailed configuration of the monitoring camera 1 shown in Fig. 1A will be described with reference to a functional block diagram shown in Fig. 2. The monitoring camera 1 is configured of a video data generating part 21, an imaging operation switching part 22, and a metadata generating part 23. First, the individual parts configuring the video data generating part 21 will be described. An imaging part 212 applies photoelectric conversion to imaging lights formed on an imaging element (not shown) through a lens part 211, and forms an imaging signal Sv.

The imaging part 212 has a preamplifier part and an A/D (Analog/Digital) converting part, not shown, for example. The preamplifier part amplifies the electric signal level of the imaging signal Sv and removes reset noise caused by correlated double sampling, and the A/D converting part converts the imaging signal Sv from the analog signal into the digital signal. Moreover, the imaging part 212 adjusts the gain of the supplied imaging signal Sv, stabilizes the black level, and adjusts the dynamic range. The imaging signal Sv subjected to various processes is supplied to an imaging signal processing part 213.

The imaging signal processing part 213 performs various signal processes for the imaging signal Sv supplied from the imaging part 212, and generates video data Dv. For example, such processes are performed: knee correction that compresses a certain level or more of the imaging signal Sv, γ correction that corrects the level of the imaging signal Sv in accordance with a set γ curve, white clipping or black clipping that limits the signal level of the imaging signal Sv to a predetermined range, and so on. Then, video data Dv is supplied to data processing part 214.

In order to reduce the data volume in communications with the client terminal 3, for example, the data processing part 214 performs coding process for video data Dv, and generates video data Dt. Furthermore, the data processing part 214 forms the generated video data Dv into a predetermined data structure, and supplies it to the client terminal 3.

Based on a switching instruction signal CA inputted from the client terminal 3, the imaging operation switching part 22 switches the operation of the monitoring camera 1 so as to obtain the optimum imaged video. For example, the imaging operation switching part 22 switches the imaging direction of the imaging part, and in addition to this, it allows the individual parts to do such processes in which a control signal CMa is supplied to the lens part 211 to switch the zoom ratio and the iris, a control signal CMb is supplied to the imaging part 212 and the imaging signal processing part 213 to switch the frame rate of imaged video, and a control signal CMc is supplied to the data processing part 214 to switch the compression rate of video data.

The metadata generating part 23 generates metadata Dm that shows information about a monitoring target. In the case in which the moving object is set to a monitoring target, the metadata generating part uses video data Dv generated in the video data generating part 21, detects the moving object, generates moving object detection information indicating whether the moving object is detected, and moving object position information that indicates the position of the detected moving object, and includes them as object information into metadata. At this time, a unique ID is assigned to each of detected objects.

In addition, information about the monitoring target is not restricted to information about the moving object, which may be information indicating the state of the area to be monitored by the monitoring camera. For example, it may be information about the temperature or brightness of the area to be monitored. Alternatively, it may be information about operations done in the area to be monitored. In the case in which the temperature is a monitoring target, the temperature measured result may be included into metadata, whereas in the case in which the brightness is a monitoring target, the metadata generating part 23 may determine the average brightness of monitor video, for example, based on video data Dv, and includes the determined result into metadata.

Moreover, the metadata generating part 23 includes imaging operation QF supplied from the imaging operation switching part 22 (for example, the imaging direction or the zoom state at the time when the monitoring target is imaged, and setting information of the video data generating part) and time information into metadata, whereby the time when metadata is generated and the situations can be left as records.

Here, the configurations of video data and metadata will be described. Video data and metadata are each configured of a data main body and link information. In the case of video data, the data main body is video data of monitor video taken by the monitoring cameras 1a and 1b. In addition, in the case of metadata, it describes information indicating a monitoring target and so on and attribute information that defines the description mode of the information. On the other hand, the term link information is association information that indicates association between video data and metadata, and information that describes attribute information defining the description mode of the descriptions of information.

For association information, for example, a time stamp that identifies video data and sequence numbers are used. The term time stamp is information that gives a point in time of generating video data (time information), and the term sequence number is information that gives the order of generating contents data (order information). In the case in which there is a plurality of pieces of monitor video having the same time stamp, the order of generating video data having the same time stamp can be identified. Moreover, for association information, such information may be used that identifies a device to generate video data (for example, manufacturer names, product type names, production numbers and so on).

In order to describe link information and a metadata main body, the Markup Language is used that is defined to describe information exchanged on the web (WWW: World Wide Web). With the use of the Markup Language, information can be easily exchanged via the network 2. Furthermore, for the Markup Language, for example, with the use of XML (Extensible Markup Language) that is used to exchange documents and electric data, video data and metadata can be easily exchanged. In the case of using XML, for the attribute information that defines the description mode of information, for example, the XML schema is used.

Video data and metadata generated by the monitoring cameras 1a and 1b may be supplied as a single stream to the client terminal 3, or video data and metadata may be supplied asynchronously to the client terminal 3 in separate streams.

In addition, as shown in Fig. 1B, even though the server function and the client function are separated from each other and applied to the monitoring system configured of the server 11 and the client terminal 12, the same function and advantages as those of the example shown in Fig. 1A described above can be obtained. The server function and the client function are separated from each other, whereby such separate use may be possible that a large amount of data is processed in the server 11 with high processing performance, whereas only the processed result is browsed in the client terminal 12 with low processing performance. As described above, the functions are distributed to exert the advantage that can construct the monitoring system 100 with increased flexibility.

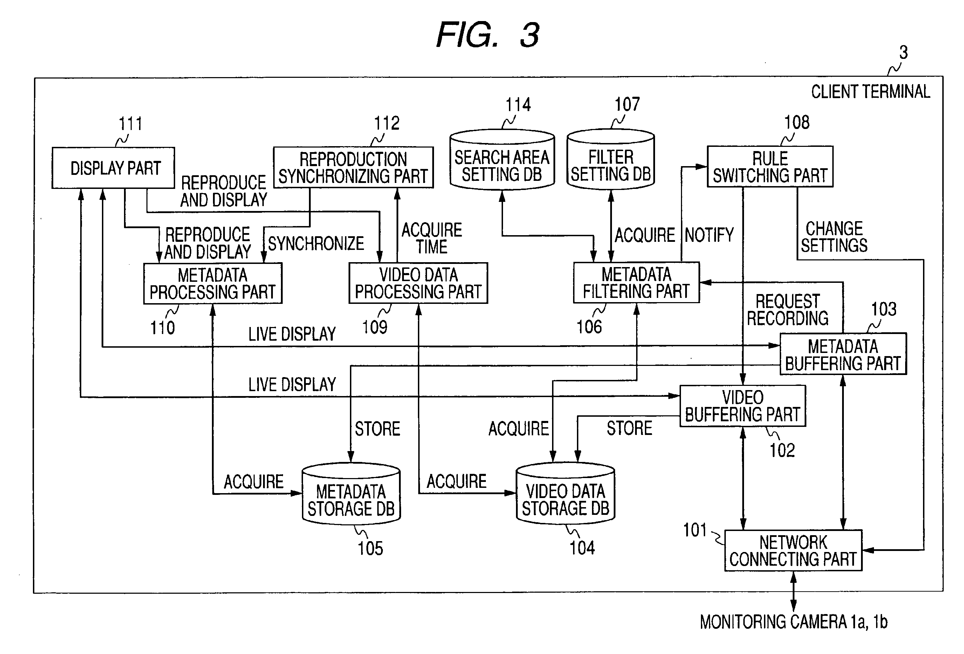

Next, the detailed configuration of the client terminal 3 shown in Fig. 1A will be described with reference to a functional block diagram shown in Fig. 3. However, the functional blocks of the client terminal 3 may be configured of hardware, or may be configured of software.

The client terminal 3 has a network connecting part 101 which transmits data with the monitoring cameras 1a and 1b, a video buffering part 102 which acquires video data from the monitoring cameras 1a and 1b, a metadata buffering part 103 which acquires metadata from the monitoring cameras 1a and 1b, a filter setting database 107 which stores filter settings in accordance with the filtering process, a search area setting database 114, a metadata filtering part 106 which filters metadata, a rule switching part 108 which notifies a change of settings to the monitoring cameras 1a and 1b, a video data storage database 104 which stores video data, a metadata storage database 105 which stores metadata, a display part 111 which displays video data and metadata, a video data processing part 109 which performs processes to reproduce video data on the display part 111, a metadata processing part 110 which performs processes to reproduce metadata on the display part 111, and a reproduction synchronizing part 112 which synchronizes the reproduction of metadata with video data.

The video buffering part 102 acquires video data from the monitoring cameras 1a and 1b, and decodes coded video data. Then, the video buffering part 102 holds obtained video data in a buffer, not shown, disposed in the video buffering part 102. Furthermore, the video buffering part 102 also in turn supplies video data held in the buffer, not shown, to the display part 111 which displays images thereon. As described above, video data is held in the buffer, not shown, whereby video data can be in turn supplied to the display part 111 without relying on the reception timing of video data from the monitoring cameras 1a and 1b Moreover, the video buffering part 102 stores the held video data in the video data storage database 104 based on a recording request signal supplied from the rule switching part 108, described later. In addition, this scheme may be performed in which coded video data is stored in the video data storage database 104, and is decoded in the video data processing part 109, described later.

The metadata buffering part 103 holds metadata acquired from the monitoring cameras 1a and 1b in the buffer, not shown, disposed in the metadata buffering part 103. Moreover, the metadata buffering part 103 in turn supplies the held metadata to the display part 111. In addition, it also supplies the metadata held in the buffer, not shown, to the metadata filtering part 106, described later. As described above, metadata is held in the buffer, not shown, whereby metadata can be in turn supplied to the display part 111 without relying on the reception timing of metadata from the monitoring cameras 1a and 1b. Moreover, metadata can be supplied to the display part 111 in synchronization with video data. Furthermore, the metadata buffering part 103 stores metadata acquired from the monitoring cameras 1a and 1b in the metadata storage database 105. Here, in storing metadata in the metadata storage database 105, time information about video data synchronized with metadata is added. With this configuration, without reading the description of metadata to determine point in time, the added time information is used to read metadata at a desired point in time out of the metadata storage database 105.

The filter setting database 107 stores filter settings in accordance with the filtering process performed by the metadata filtering part 106, described later, as well as supplies the filter settings to the metadata filtering part 106. The term filter settings is settings that indicate determination criteria such as the necessities to output alarm information and to determine whether to switch the imaging operations of the monitoring camera 1a, 1b for every information about the monitoring target included in metadata. The filter settings are used to filter metadata to show the filtered result for every information about the monitoring target. The filtered result shows the necessities to output alarm information, to switch the imaging operations of the monitoring cameras 1a and 1b, and so on.

The metadata filtering part 106 uses the filter settings stored in the filter setting database 107 to filter metadata for determining whether to generate alarms. Then, the metadata filtering part 106 filters metadata acquired from the metadata buffering part 103 or metadata supplied from the metadata storage database 105, and notifies the filtered result to the rule switching part 108.

The search area setting database 114 stores information about the search area set to the object detected in video. The area set as the search area is indicated in a polygon, for example, together with its coordinate information, a flag that shows whether to detect the moving object is added thereto, and is formed to be search area information. The search area information stored in the search area setting database 114 is referenced in performing the filtering process by the metadata filtering part 106, and analysis in accordance with the search area information is performed. The detail of the process in this case will be described later.

Based on the filtered result notified from the metadata filtering part 106, the rule switching part 108 generates the switching instruction signal, and notifies changes such as the switching of the imaging direction to the monitoring cameras 1a and 1b. For example, the rule switching part outputs the instruction of switching the operations of the monitoring cameras 1a and 1b based on the filtered result obtained from the metadata filtering part 106, so as to obtain monitor video suited for monitoring. Moreover, the rule switching part 108 supplies the recording request signal to the video data storage database 104 to store the video data acquired by the video buffering part 102 in the video data storage database 104 based on the filtered result.

The video data storage database 104 stores video data acquired by the video buffering part 102. The metadata storage database 105 stores metadata acquired by the metadata buffering part 103.

The video data processing part 109 performs the process that allows the display part 111 to display video data stored in the video data storage database 104. In other words, the video data processing part 109 in turn reads video data from the reproduction position instructed by a user, and supplies the read video data to the display part 111. In addition, the video data processing part 109 supplies the reproduction position (a reproduction point in time) of video data being reproduced to the reproduction synchronizing part 112.

The reproduction synchronizing part 112 which synchronizes the reproduction of metadata with video data supplies a synchronization control signal to the metadata processing part 110, and controls the operation of the metadata processing part 110 so that the reproduction position supplied from the video data processing part 109 is synchronized with the reproduction position of metadata stored in the metadata storage database 105 by means of the metadata processing part 110.

The metadata processing part 110 performs the process that allows the display part 111 to display metadata stored in the metadata storage database 105. In other words, the metadata processing part 110 in turn reads metadata from the reproduction position instructed by the user, and supplies the read metadata to the display part 111. In addition, as described above, in the case in which video data and metadata are reproduced, the metadata processing part 110 controls the reproduction operation based on the synchronization control signal supplied from the reproduction synchronizing part 112, and outputs metadata synchronized with video data to the display part 111.

The display part 111 displays live (raw) video data supplied from the video buffering part 102, reproduced video data supplied from the video data processing part 109, live metadata supplied from the metadata buffering part 103, or reproduced metadata supplied from the metadata processing part 110. In addition, based on the filter settings from the metadata filtering part 106, the display part 111 uses any one of monitor video, metadata video, and filter setting video, or uses video combining them, and displays (outputs) video showing the monitoring result based on the filtered result.

Moreover, the display part 111 also functions as a graphical user Interface (GUI). The user uses an operation key, a mouse, or a remote controller, not shown, and selects a filter setting menu displayed on the display part 111 to define the filter, or to display information about the analyzed result of individual processing parts and alarm information in GUI.

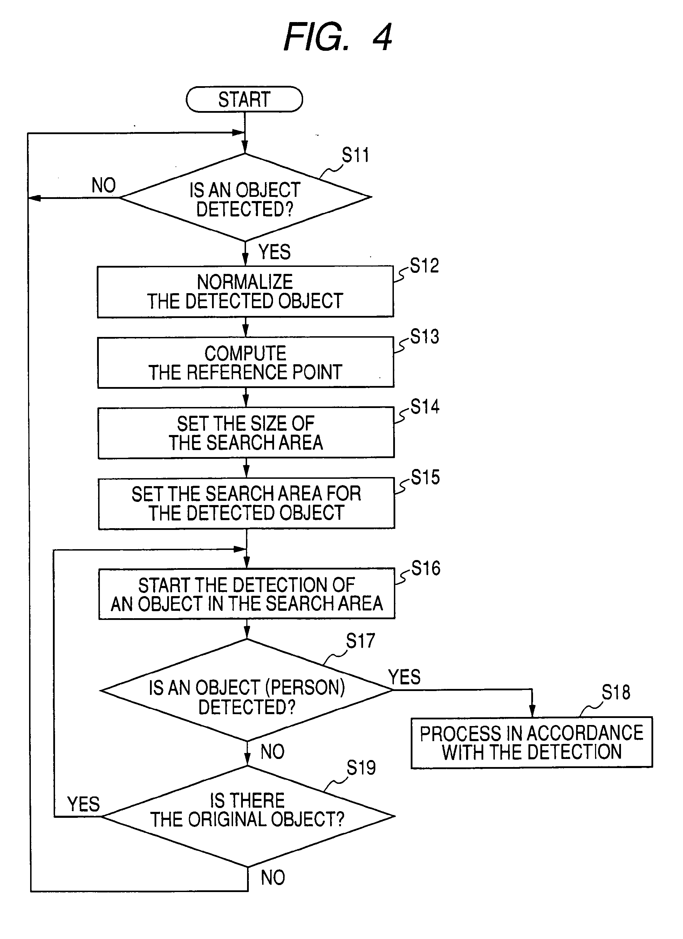

Fig. 4 shows a flow chart depicting an exemplary monitoring process according to the embodiment in which an object is detected from monitor video, and the monitoring area is set based on the detected object for monitoring. For example, for detection of the object, it is the process of detecting that an automobile is stopped in video. For example, for the settings of the monitoring area with respect to the detected object, it is area settings to monitor whether there is a person who gets on or off the automobile detected as it is stopped. The process shown below is performed by the individual parts in the client terminal 3 shown in Fig. 3. More specifically, it is processed by using the metadata filtering part 106 and its peripherals, the filter setting database 107, the search area setting database 114, and so on. In other words, the processing parts performing the processes described below use the filtering part and the databases for processing: a detected object determining process that determines the position of the object detected from video data, a reference position setting process that sets the reference position of the object determined in the detected object determining process, a detection process that sets a single or a plurality of search areas within video shown by video data relatively to the reference position set in the reference position setting process and detects the object within the set search area.

First, object information of the video analyzed result indicated by metadata (for example, the position, the type, the status ad so on) is determined to decide whether there is an object that moves in video and stops (Step S11). In this determination, if it is determined that there is a relevant object, a process is performed that normalizes the shape of the detected object (Step S12). For example, for the normalization process, the object is normalized into a polygon.

When the object is normalized, a process is performed that computes the reference point in the normalized object (Step S13). An exemplary computing process of the reference point will be described later, but a plurality of candidates may be set for the reference point. Then, in accordance with predetermined conditions, the size of the search area is set (Step S14), and the set search area is set in imaged video relatively to the position of the reference point (Step S15). For example, if it is detected that an object corresponding to an automobile is stopped in Step S11, the search area is set to the vicinity of the position at which the side door of the object (the automobile) is supposed to exist.

When settings are done in this state, object information about the video analyzed result within the search area is focused for detection process to start the detection within the search area (Step S16), it is determined whether an object (person) is detected (Step S17), and if detected, the process is performed based on the detected state (Step S18). For example, in the case in which an object corresponding to a person suddenly appears within the search area, it is determined that there is a person who has got off the detected object (the automobile) in Step S11 for corresponding processing. Alternatively, in the case in which there is an object that has disappeared within the search area, it is determined that there is a person who has got on the detected object (the automobile) in Step S11 for corresponding processing.

If it is determined that no object is detected in Step S17, it is determined whether the detected object (the automobile) in Step S11 is still being detected (Step S19). In the case in which the detected state is continuing, the determination in Step S17 is repeated. If it is determined in Step S19 that there is no detected object, the process returns to the determination in Step S11, and goes to the detection process for the next object. In addition, the flow chart shown in Fig. 4 shows the detection process for a single object, but this scheme may be performed in which a plurality of objects is detected from a single piece of video at the same time, and a plurality of the detection processes shown in the flow chart in Fig. 4 is performed at the same time in parallel.

Next, specific examples of the process steps shown in the flow chart in Fig. 4 will be described. As described in the flow chart shown in Fig. 4, in the embodiment, the search area is defined with reference to the position or the position of a part of the detected object, whereby appropriate search can be performed. To this end, it is necessary to compute the reference point under the constant conditions, since even though the detected object is normalized and represented in a polygon (a polygon with N vertices: N is a positive integer), the length of each side of the polygon with N vertices is varied.

On this account, it is necessary to normalize a polygon with N vertices that is an object.

The places that can relatively easily compute the reference point are set as the candidates of the reference point.

The barycenter and the point on the sides and the diagonal lines of all or a part of a polygon are used.

For the size of the search area, fixed and variable modes can be set according to the monitoring conditions.

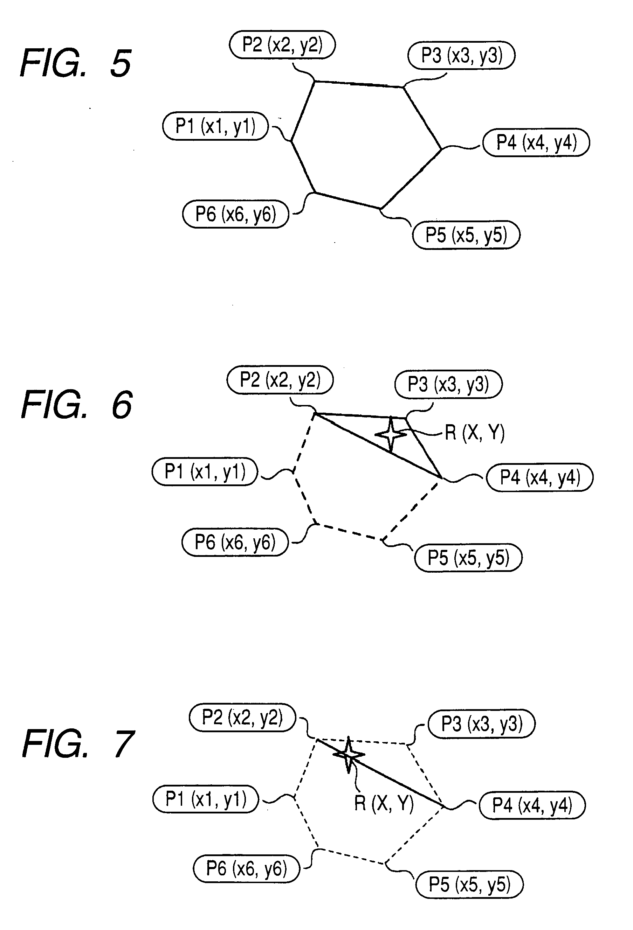

First, the normalization process for the detected object will be described. It is the premise that the detected object is represented by a polygon (polygon with N vertices: N is a positive integer). However here, since the length of each side is varied depending on the time when detected, as shown in Fig. 5, each vertex of a normalized polygon with N vertices (here, a hexagon) is given with a name in accordance with the rules below.

Among the coordinates x1 to xn of the individual vertices, a vertex having the minimum value is P1 (x1, y1). In the case in which there is a plurality of vertices with the minimum value, a vertex having the smallest Y-coordinate is P1 among them. Subsequently, the vertices are named as P2, P3 and so on clockwise. In this manner, as shown in Fig. 5, the polygon that represents the object is normalized.

Next, the process will be described that determines the reference point from the normalized polygon with N vertices obtained as described above. Here, processes that determine two types reference point are determined will be described.

For one process, such a process can be adapted that the barycenter of all or a part of the polygon is the reference position. In this case, as shown in Fig. 6, the position of the barycenter of a polygon with k vertices is determined that is formed of all or a part of a vertex (xa, ya), (xb, yb), (xc, yc) and so on of the polygon. The barycenter of the polygon with k vertices can be determined by equations below:

$$X = (xa + xb + xc \ldots)/k$$

$$Y = (ya + yb + yc ...)/k$$

In the example shown in Fig. 6, a = 2, b = 3, c = 4, and k = 3. The reference position can be determined from the coordinates of the object when they are stored.

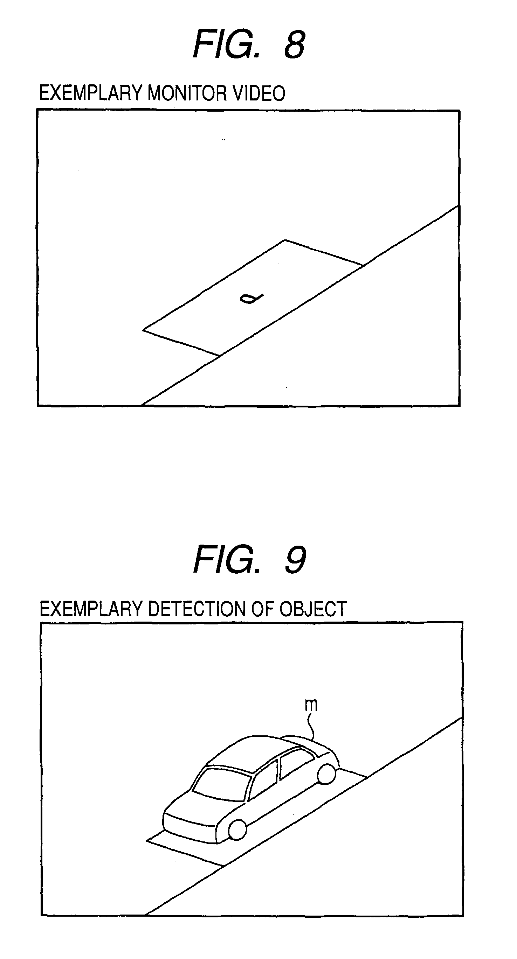

For another process, such a process can be adapted that a point on a given side or diagonal lines is the reference position. In this case, as shown in Fig. 7, the position on the side or the diagonal line between two vertices (xa, ya) and (xb, yb) can be determined from equations below:

$$X = xa*(1 - m) + xb*m$$

$$Y = ya*(1 - m) + yb*m$$

Where 0 <= m < 1.

In the example shown in Fig. 7, a = 2, b = 4, and m = 0.3. The reference position can be determined from the coordinates of the object when they are stored. The reference point may be determined in accordance with the processes other than these processes.

Next, the settings of the size of the search area will be described.

In the case in which the shape of the object is not changed but the size is varied, there are the cases in which it is better to change the search area in association with the varied size, and it is not good to do so. For example, in the case in which it is desired to find a person besides an automobile, the size of a person is not varied depending on the size of an automobile. However, in the case in which the size of the person is varied because the same automobile is at the distance, it is desirable to reduce the size of the person at the same ratio as that of the automobile. In accordance with this, it is also necessary to change the distance from the reference point at the same ratio.

In order to implement this, a scaling factor S is introduced to define the ratio with respect to a vector from the reference position in representing the vertices of the search area. The scaling factor S can be determined from changes in the size of the object (for example, the amount of a change in the area of the object), but since the length of the side is changed even though the premise is a polygon with N vertices, the scaling factor is the square root of a change in the area. As the example described above, although there is a scheme to use S = 1 as it is (that is, no change), for example, it is externally given for setting.

An example that the search area is set as described above will be discussed as an exemplary screen is shown. For example, it is an example that monitors a parking position on the road. Fig. 8 shows an example that the position is taken with the monitoring camera 1a and monitored by the client terminal 3 for display. Suppose this place is kept monitored by imaging, and an automobile m is stopped at this place as shown in Fig. 9. The automobile stopped is a detection object.

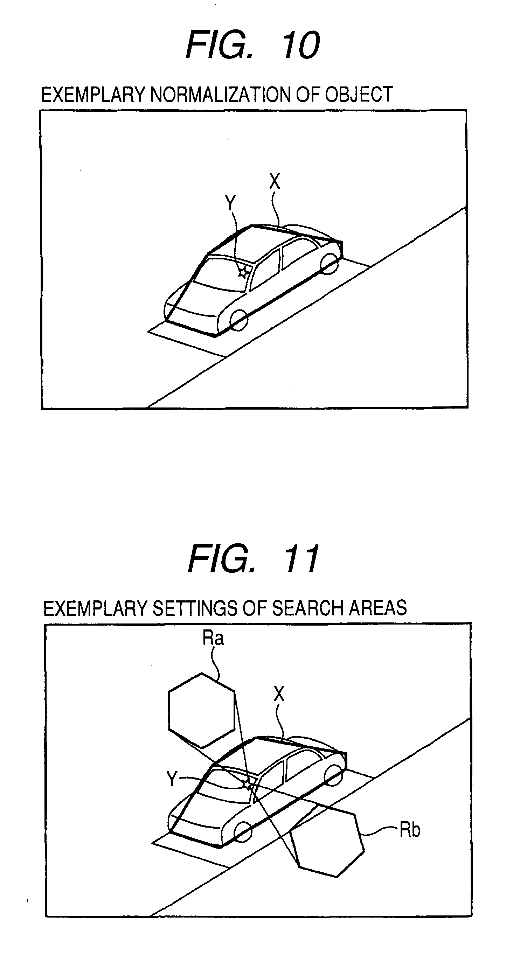

Here, as shown in Fig. 10, a polygon shape X that the object (the automobile m) is normalized is obtained by computation in the client terminal 3. Then, a reference position Y within the polygon shape X is computed.

When the reference position Y is determined, as shown in Fig. 11, search areas Ra and Rb are set at the positions certain distances (sections) separated from the reference position. Here, in the case in which it is assumed that the detected object is an automobile, the direction in which the side door of the automobile exists is guessed by the shape of the object, and the search areas Ra and Rb are set in the guessed direction. In Fig. 11, the search areas are set on the right and left sides of the automobile, but the search area may be set on one side. Then, as described above, from the detected state of the object (person) within the search area thus set, the state of the person getting on and off the automobile is detected. In addition, the normalized polygon and the search area shown in Figs. 10 and 11 are not displayed in monitor video. However, these may be displayed in monitor video.

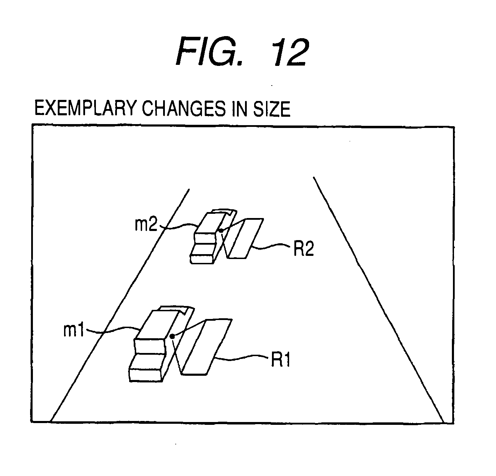

For the example that the size of the search area is varied depending on the detected state of the object to be the basis in the monitoring screen, for example, as shown in Fig. 12, this case can be assumed that the distances between the camera and imaged two automobiles m1 and m2 are greatly different. In this case, since the size of imaging people getting on and off for detection is naturally changed, the size of search areas R1 and R2 is changed for setting. The distances between the reference position and the search areas R1 and R2 may be changed correspondingly.

In addition, in the embodiment described above, the monitoring camera is configured to output video data as well as metadata in which the metadata is analyzed on the client terminal side for searching an object (person). However, for the monitoring camera, it may be configured to output video data in which the descriptions of video (an image) shown by video data are analyzed by image recognition processing by means of the client terminal for the same processes. Alternatively, this scheme may be done in which the entire processing may be performed inside a video camera (the monitoring camera) and the camera outputs the processed result.

Moreover, a series of the process steps of the embodiment described above can be executed by hardware, which may be executed by software. In the case in which a series of the process steps is executed by software, a program configuring the software is installed in a computer incorporated in a dedicated hardware, or a program configuring desired software is installed in a multi-purpose personal computer that can execute various functions by installing various programs.

It should be understood by those skilled in the art that various modifications, combinations, sub-combinations and alterations may occur depending on design requirements and other factors insofar as they are within the scope of the appended claims or the equivalents thereof.

**Claims**

1. A monitoring apparatus which uses video data imaged and outputted from a monitoring imaging device for monitoring, the apparatus comprising:

   a detected object determination processing part configured to determine a position of a detected object from the video data;
   a reference position setting processing part configured to set a reference position of the object determined by the detected object determination processing part; and
   a detection processing part configured to relatively set a single or a plurality of search areas within a range of video shown by the video data with respect to the reference position set by the reference position setting processing part, and to detect an object within the set search area.

2. The monitoring apparatus according to claim 1, wherein the detected object determining process in the detected object determination processing part and the detection process in the detection processing part are a determination process and a detection process which use metadata indicating information about a monitoring target that is outputted from the monitoring imaging device together with video data.

3. The monitoring apparatus according to claim 1 or 2, wherein the setting of a search area in the detection processing part is an area that is set in predetermined size at a position separated from a predetermined distance in a predetermined direction from the reference position.

4. The monitoring apparatus according to claim 1, 2 or 3, wherein the size of a search area set in the detection processing part is the size corresponding to the size that the object determined in the detected object determination processing part is normalized.

5. A monitoring method which uses video data imaged and outputted from a monitoring imaging device for monitoring, the method comprising the steps of:

   determining a position of a detected object from the video data;
   setting a reference position of the object determined in the detected object determination process; and
setting a single or a plurality of search areas within a range of video shown by the video data relatively to the reference position set in the reference position setting process, and detecting an object within the set search area.

6. A program which uses video data imaged and outputted from a monitoring imaging device and allows monitoring by mounting the program on a data processing apparatus, the program comprising the steps of:

   determining a position of a detected obj ect from the video data;
   setting a reference position of the object determined in the detected object determination process; and
   setting a single or a plurality of search areas within a range of video shown by the video data relatively to the reference position set in the reference position setting process, and detecting an object within the set search area.

# FIG. 1A

<u>100</u>

1a

VIDEO DATA, METADATA

3

2

VIDEO DATA, METADATA

1b

# FIG. 1B

<u>100</u>

11

1a

VIDEO DATA, METADATA

2

VIDEO DATA,
METADATA

VIDEO DATA, METADATA

1b

12

EP 1 884 793 A2

# FIG. 2

12

# FIG. 3

CLIENT TERMINAL 3

111 DISPLAY PART

112 REPRODUCTION SYNCHRONIZING PART

114 SEARCH AREA SETTING DB

107 FILTER SETTING DB

108 RULE SWITCHING PART

REPRODUCE AND DISPLAY

REPRODUCE AND DISPLAY

SYNCHRONIZE

ACQUIRE TIME

ACQUIRE  NOTIFY

CHANGE SETTINGS

110 METADATA PROCESSING PART

109 VIDEO DATA PROCESSING PART

106 METADATA FILTERING PART

REQUEST RECORDING

103 METADATA BUFFERING PART

LIVE DISPLAY

LIVE DISPLAY

STORE

ACQUIRE  STORE

VIDEO BUFFERING PART

102

ACQUIRE  METADATA STORAGE DB  105

ACQUIRE  VIDEO DATA STORAGE DB  104

101 NETWORK CONNECTING PART

MONITORING CAMERA 1a, 1b

EP 1 884 793 A2

# FIG. 4

```
                    ┌──────────┐
                    │  START   │
                    └────┬─────┘
                         │
              ┌──────────┼─────────────── S11
              │        ╱─┴─╲
     NO       │      ╱ IS AN OBJECT ╲
    ◄─────────┤     ╱  DETECTED?     ╲
              │      ╲               ╱
              │        ╲───┬───────╱
              │            │ YES
              │    ┌───────┴────────┐  S12
              │    │   NORMALIZE    │
              │    │ THE DETECTED OBJECT │
              │    └───────┬────────┘
              │            │
              │    ┌───────┴────────┐  S13
              │    │    COMPUTE     │
              │    │ THE REFERENCE POINT │
              │    └───────┬────────┘
              │            │
              │    ┌───────┴────────┐  S14
              │    │  SET THE SIZE OF │
              │    │ THE SEARCH AREA │
              │    └───────┬────────┘
              │            │
              │    ┌───────┴────────┐  S15
              │    │ SET THE SEARCH AREA FOR │
              │    │ THE DETECTED OBJECT │
              │    └───────┬────────┘
```

IS AN OBJECT DETECTED? — NO / YES

NORMALIZE THE DETECTED OBJECT — S12

COMPUTE THE REFERENCE POINT — S13

SET THE SIZE OF THE SEARCH AREA — S14

SET THE SEARCH AREA FOR THE DETECTED OBJECT — S15

START THE DETECTION OF AN OBJECT IN THE SEARCH AREA — S16

IS AN OBJECT (PERSON) DETECTED? — S17 — YES

PROCESS IN ACCORDANCE WITH THE DETECTION — S18

IS THERE THE ORIGINAL OBJECT? — S19 — YES / NO

FIG. 5

P2 (x2, y2)    P3 (x3, y3)

P1 (x1, y1)    P4 (x4, y4)

P6 (x6, y6)    P5 (x5, y5)

FIG. 6

P2 (x2, y2)    P3 (x3, y3)

R (X, Y)

P1 (x1, y1)    P4 (x4, y4)

P6 (x6, y6)    P5 (x5, y5)

FIG. 7

P2 (x2, y2)    P3 (x3, y3)

R (X, Y)

P1 (x1, y1)    P4 (x4, y4)

P6 (x6, y6)    P5 (x5, y5)

# FIG. 8

EXEMPLARY MONITOR VIDEO

# FIG. 9

EXEMPLARY DETECTION OF OBJECT

EP 1 884 793 A2

# FIG. 10

EXEMPLARY NORMALIZATION OF OBJECT

# FIG. 11

EXEMPLARY SETTINGS OF SEARCH AREAS

# FIG. 12

EXEMPLARY CHANGES IN SIZE

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006205070 A

- JP 2003274390 A